(19) Europäisches Patentamt
European Patent Office
Office européen des brevets

(11) Publication number: **0 130 839**
**B1**

(12) # EUROPEAN PATENT SPECIFICATION

(45) Date of publication of patent specification: **02.05.90**

(21) Application number: **84304533.7**

(22) Date of filing: **02.07.84**

(51) Int. Cl.$^5$: **C 08 L 51/04,** C 08 L 25/04, C 08 L 71/12, C 08 F 291/02 // (C08F291/02, 220:42, 212:00)

(54) **Thermoplastic resin and a blended composition incorporating the same.**

(30) Priority: **01.07.83 JP 118157/83**
**01.07.83 JP 118158/83**

(43) Date of publication of application:
**09.01.85 Bulletin 85/02**

(45) Publication of the grant of the patent:
**02.05.90 Bulletin 90/18**

(84) Designated Contracting States:
**DE FR GB IT NL**

(56) References cited:
**EP-A-0 104 899**
**FR-A-2 246 594**
**FR-A-2 346 375**
**GB-A-2 044 276**
**GB-A-2 044 782**
**US-A-3 367 995**

(73) Proprietor: **JAPAN SYNTHETIC RUBBER CO., LTD.**
**11-24, Tsukiji-2-chome Chuo-ku**
**Tokyo 104 (JP)**

(72) Inventor: **Mawatari, Masaaki**
**650-1, Kasadocho**
**Suzuka-shi (JP)**
Inventor: **Katsuki, Nobuyuki**
**8-6, Noda-1-chome**
**Kuwana-shi (JP)**
Inventor: **Abe, Mitsuo**
**1642-48, Ikuwamachi**
**Yokkaichi-shi (JP)**

(74) Representative: **Tubby, David George et al**
**MARKS & CLERK 57-60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 130 839 B1

**Description**

The present invention relates to a novel thermoplastic resin having excellent surface gloss, stress-cracking resistance and impact resistance when formed into moulded articles and having excellent processability. This invention also provides a novel resin composition obtained by compounding the above resin with a poly(phenylene ether), which imparts to moulded articles excellent heat resistance, impact resistance, surface gloss, paintability (i.e. its ability to be painted) and solvent resistance.

Resins of the diene-based rubber-like polymer-styrene-acrylonitrile copolymer type are generally called ABS resins. They have excellent gloss, processability, mechanical strength and chemical resistance, and are widely used in electric appliances, household utensils, automotive parts and office appliances. In recent years, however, the level of gloss of conventional ABS resins has been perceived as insufficient, espcially for housings for light electrical appliances. To meet these requirements, various proposals have been made to produce resins of higher gloss. For instance, there is known a method of enhancing the fluidity of resins by decreasing the molecular weight in order to enhance the gloss. Such a method, however, is undesirable because it necessitates a sacrifice in the quality of impact resistance and stress-cracking resistance, which are necessary characteristics of the resins used in light electrical appliances. High impact styrenic resins other than ABS resins are of low gloss, and hence, efforts have been made to improve gloss by modifications in the processing stages, such as elevation of the mould temperature. However, the gloss of the product thus obtained is not sufficient, and the moulding cycle becomes longer, resulting in an increased cost.

On the other hand, poly(phenylene ether) resins are widely known to have excellent heat resistance, as well as mechanical and electrical properties. These resins, however, are seldom used alone, but are mostly used in combination with polystyrene or rubber-modified polystyrene for forming a modified resin, because of their low impact resistance, insufficient processability and unsatisfactory chemical resistance. Since such a modified poly(phenylene ether) has excellent heat resistance, mechanical and electrical properties and processability, it is widely used in automotive parts, office appliances, electric appliance parts, and the like.

Since rubber-modified polystyrenes are generally produced by the bulk-suspension polymerization of monomeric styrene containing a rubber-like polymer dissolved therein, it is necessary to limit the concentration of the polymer to a certain range which is favourable for phase transition in view of the solution viscosity. Accordingly, the amount of rubber-like polymer is preferably about 10% by weight or less based on the weight of the rubber-modified polystyrene. A composition comprising a rubber-modified polystyrene of such a recipe and a poly(phenylene ether) does not exhibit sufficient impact resistance and, as a consquence, a moulded article formed from it tends to break at the corners or thin wall portions when released from the mould. A rubber-like elastomer is, therefore, incorporated in the composition to improve the impact resistance. Even in this case, the resulting composition does not have sufficient impact strength and, in addition, it tends to discolour upon heating and is inferior in processability.

Furthermore, a composition consisting of a rubber-modified polystyrene and a poly(phenylene ether) gives a moulded product which has the disadvantages that: surface gloss is inferior; such phenomena as cracking, crazing, absorption (the coating surface is unevenly coloured) and the like tend occur at the surface when the moulded article is coated; and painting and solvent resistance are inferior.

Styrene-acrylonitrile copolymers and rubber-like polymer-styrene-acrylonitrile copolymers (ABS resins) are widely used as a result of their excellent paintability, solvent resistance, impact resistance and processability. However, these resins generally contain 20 to 30% by weight of acrylonitrile and, as a consequence, have poor compatibility with poly(phenylene ether); the blend, therefore, gives moulded articles which generally have unsatisfactory appearance, impact resistance, heat resistance, and paintability.

Various means have been proposed to eliminate the above-noted disadvantages of the modified poly(phenylene ether). For instance, Japanese Patent Publication No. 8,139/82 discloses a blend of a methyl methacrylate-modified ABS resin and a poly(phenylene ether). Such a blend, however, has poor thermal stability and is commercially unfavourable because of the high cost of methyl methacrylate. Japanese Patent Publication No. 40,046/73 discloses a heat-resistance resin blend obtained by blending a styrene-acrylonitrile copolymer having an acrylonitrile content smaller than that of generally available copolymers with a poly(phenylene ether). The resulting resin blend, however, does not show sufficiently improved heat resistance and solvent resistance. Moulded articles made from both resin blends described above also have unsatisfactory surface gloss and paintability.

There has also been proposed a composition comprising a poly(phenylene ether) and a styrenic resin having a large content of alkenyl cyanide compound and which has added thereto a specific amount of styrenic resin containing a small amount of alkenyl cyanide compound. Such a composition, however, still has unsatisfactory paintability.

We have now discovered that a thermoplastic resin having excellent stress-cracking resistance, impact resistance, and processability and having a high gloss, which, when blended with a poly(phenylene ether), is capable of producing a thermoplastic resin composition having improved heat resistance, impact resistance, surface gloss, solvent resistance and paintability, can be achieved by a thermoplastic resin in which the alkenyl cyanide compound content is carefully controlled.

According to this invention there is provided an impact resistant thermoplastic resin which is obtained by polymerizing, in the presence or absence of a rubber-like polymer, a resin constituent mixture comprising an aromtic alkenyl compound, an alkenyl cyanide compound, and, if necessary, other alkenyl monomer(s) copolymerizable therewith, characterized in that the resin contains 5 to 100% by weight of methyl ethyl ketone-soluble matter (total free polymer) and that this total free polymer comprises: (A) from 1 to 50% by weight of a polymer having an alkenyl cyanide compound content of 1% or more but less than 10% by weight: (B) from 1 to 70%, preferably from 5 to 70%, by weight of a polymer having an alkenyl cyanide compound content of 10% or more but less than 20% by weight; (C) from 5 to 90%, preferably from 10 to 90%, by weight of a polymer having an alkenyl cyanide compound content of 20% or more but less than 40% by weight; and (D) from 0 to 70% by weight of polymer having an alkenyl cyanide compound content of 40% by weight or more, and has a total alkenyl cyanide compound content of 10 to 40% by weight and preferably has an intrinsic viscosity of from 0.1 to 1.5 dl/g (as measured in methyl ethyl ketone at 30°C).

The resin defined above, whether in the presence of rubber-like polymer or not, is to be distinguished from the stepwise graft copolymer described in earlier GB Patent 2044782. In that earlier disclosure, distinct grafting steps are carried out, and the amounts and compositional aspects of each step graft are defined. The amounts of course total to 100%, In the present invention, a single polymer is provided, and the amounts available falling with each selected compositional range are defined; these do not, as a definition, total 100% and there are no steps or graft polymerisation corresponding to the current numerical selection of 1—10, 10—20, 20—30 and 40+% of nitrile content. Moreover, the total ranges barely overlap, it being typically envisaged in the present invention that most of the nitrile material present should be at levels lower than the 30% of the minimum, compositional level in GB 2044782.

The invention also provides a thermoplastic resin composition comprising:

(i) from 10 to 95% by weight of said impact resistant thermoplastic resin;

(ii) from 5 to 90% by weight of a poly(phenylene ether); and

(iii) from 0 to 85% by weight of other styrenic resin(s).

The rubber-like polymers which may be used in this invention include: poly-α-olefins such as polyethylene and polypropylene; ethylene-α-olefin copolymers such as ethylene-propylene random or block copolymers and ethylene-butene random or block copolymers; ethylene-unsaturated carboxylate ester copolymers such as ethylene-methyl methacrylate copolymer and ethylene-butyl acrylate copolymer; copolymers of ethylene and saturated fatty acid vinyl esters such as ethylene-vinyl acetate copolymer; ethylene-propylene- nonconjugated diene terpolymers such as ethylene-propylene-ethylidenenorbornene terpolymer and ethylene-propylene-hexadiene terpolymer; diene rubbers such as polybutadiene, styrene-butadiene random or block copolymer, acrylonitrile-butadiene copolymer and butadiene-isoprene copolymer; butylene-isoprene copolymer; acrylic rubber; and hydrogenation products of block copolymers of an aromatic alkenyl compound such as styrene, α-methylstyrene or *p*-methylstyrene and a diene such as butadiene or isoprene. The acrylic rubber is preferably a polymer obtained by polymerizing a monomer mixture comprising, as the main component, at least one alkyl acrylate and/or methacrylate in which the alkyl group has from 2 to 12 carbon atoms. Such alkyl acrylates an methacrylates include specifically ethyl, butyl, hexyl, octyl, 2-ethylhexyl and lauryl acrylates and methacrylates. If necessary, monomers copolymerizable with the alkyl acrylates or methacrylates may be copolymerized with them. Such comonomers include ethylenically unsaturated monomers, for example, acrylonitrile, vinyltoluene, styrene, α-methylstyrene and *p*-methylstyrene; conjugated diene monomers, for example, butadiene, isoprene, 2,3-dimethylbutadiene, piperylene and chloroprene; and non-conjugated diene monomers, for example dicyclopentadiene, ethylidenenorbornene, 1,4-hexadiene, 1,5-hexadiene, 2-methyl-1,5-hexadiene, 1,4-cyclopentadiene and 1,5-cyclooctadiene. These monomers may be used alone or in admixture of two or more. The proportion of the monomer copolymerizable with the alkyl acrylates or methacrylates is preferably from 0 to 50%, more preferably from 0 to 30%, by weight based on the weight of the total monomers.

These rubber-like polymers are used alone or in admixture of two or more. Preferred rubber-like polymers are ethylene-propylene-nonconjugated diene terpolymers, diene rubbers and acrylic rubbers, most preferred polymers being polybutadiene, acrylic rubber and styrene-butadiene copolymer preferably containing 50% by weight or less of styrene. When a rubber-like polymer containing 10% by weight or more of toluene insolubles is used, the surface gloss and the solvent resistance of the moulded articles are excellent.

Examples of the aromatic alkenyl compounds used in this invention are styrene, α-methylstyrene, *p*-methylstyrene, vinylxylene, monochlorostyrene, monobromostyrene, dichlorostyrene, dibromostyrene, *p*-t-butylstyrene, ethylstyrene and vinylnaphthalene. These compounds are used alone or in admixture of two or more. A preferred aromatic alkenyl compound is styrene. In the case of a mixture, the preferred styrene content is 50% by weight or more.

Examples of the alkenyl cyanide compounds used in this invention include acrylonitrile and methacrylonitrile, of which acrylonitrile is preferred. In the impact resistant thermoplastic resin of the present invention, the total alkenyl cyanide compound content of the total free polymer is from 10 to 40%, preferably from 15 to 35%, more preferably from 15 to 30%, and most preferably from 20 to 28%, by weight. If the alkenyl cyanide compound content is below 10% by weight, moulded articles have inferior

surface gloss and impact resistance and, when blended with a poly(phenylene ether), the heat resistance is also decreased, whereas, if the alkenyl cyanide compound content exceeds 40% by weight, the processability deteriorates and moulded articles have inferior surface gloss, stress-cracking resistance and impact resistance, and when blended with a poly(phenylene ether), the heat resitance also decreases.

The impact resistant thermoplastic resin of the present invention is characterized by having a distribution of polymers differing in alkenyl cyanide content in the total free polymer (methyl ethyl ketone-soluble matter). The composition of the polymer differing in alkenyl cyanide compound content in the total free polymer is as follows:

(A) The proportion of polymer having an alkenyl cyanide compound content of 1% by weight or more but less than 10% by weight is from 1 to 50%, preferably from 5 to 40%, and most preferably from 5 to 30%, by weight. If this proportion is below 1% by weight, moulded articles have inferior surface gloss, whereas, if the proportion exceeds 50% by weight, moulded articles have inferior impact resistance and surface gloss. In the case of a blend with a poly(phenylene ether), if the proportion of said polymer is less than 1% by weight, moulded articles have inferior heat resistance, impact resistance, surface gloss and paintability, whereas, if the proportion is 50% by weight or more, moulded articles have inferior paintability and solvent resistance.

(B) The proportion of polymer having an alkenyl cyanide compound content of 10% by weight or more but less than 20% by weight is from 1 to 70%, preferably from 5 to 70%, more preferably from 5 to 60% and most preferably from 7 to 50% by weight. If this proportion is less than 1% by weight, moulded articles have inferior surface gloss, whereas, if it exceeds 70% by weight, moulded articles have inferior impact resistance and surface gloss. In the case of a blend with a poly(phenylene ether), if this proportion is less than 1% by weight, moulded articles have inferior heat resistance, impact resistance and paintability, whereas, if it exceeds 70% by weight, the paintability and solvent resistance decrease.

(C) The proportion of polymer having an alkenyl cyanide compound content of 20% by weight or more but less than 40% by weight is from 5 to 90%, preferably from 10 to 90%, more preferably from 10 to 80%, still more preferably from 20 to 80%, and most preferably from 30 to 80% by weight. If this proportion is less than 5% by weight, moulded articles have inferior surface gloss, impact resistance and stress-cracking resistance, whereas, if it exceeds 90% by weight, processability declines and moulded articles have inferior surface gloss. In the case of a blend with a poly(phenylene ether), if this proportion is below 5% by weight, moulded articles have inferior paintability and solvent resistance, whereas, if it exceeds 90% by weight, the heat resistance, impact resistance, surface gloss and paintability are inferior.

(D) The proportion of polymer having an alkenyl cyanide compound content of 40% by weight or more is from 0 to 70%, preferably from 0 to 20%, and most preferably from 0% by weight. If this proportion exceeds 70% by weight, processability declines and moulded articles have inferior surface gloss, impact resistance and stress-cracking resistance. In the case of a blend with a poly(phenylene ether), if this proportion exceeds 70% by weight, the heat resistance, impact resistance, surface gloss and paintability are inferior.

The thermoplastic resin contains the total free polymer in a proportion of from 5 to 100%, preferably from 10 to 100%, and most preferably from 15 to 100%, by weight. The total free polymer preferably has an intrinsic viscosity (as measured in methyl ethyl ketone at 30°C) of from 0.1 to 1.5, more preferably from 0.3 to 1.5, and most preferably from 0.4 to 0.8, dl/g.

Examples of alkenyl monomers copolymerizable with the aromatic alkenyl compounds and alkenyl cyanide compounds used in this invention include: alkyl, aryl and aralkyl acrylates, such as methyl acrylate, ethyl acrylate, propyl acrylate, butyl acrylate, amyl acrylate, hexyl acrylate, octyl acrylate, 2-ethylhexyl acrylate, cyclohexyl acrylate, dodecyl acrylate, octadecyl acrylate, phenyl acrylate and benzyl acrylate; alkyl, aryl and aralkyl methacrylates such as methyl methacrylate, ethyl methacrylate, propyl methacrylate, butyl methacrylate, amyl methacrylate, hexyl methacrylate, octyl methacrylate, 2-ethylhexyl methacrylate, cyclohexyl methacrylate, dodecyl methacrylate, octadecyl methacrylate, phenyl methacrylate and benzyl methacrylate; unsaturated acid anhydrides such a maleic anhydride, itaconic anhydride and citraconic anhydride; and unsaturated acids such as acrylic acid and methacrylic acid. These compounds may be used alone or in admixture of two or more. The copolymerizable alkenyl monomers, if used, are preferably added to the resin constituents in an amount of 50% by weight or less, more preferably 30% by weight or less.

When the impact resistant thermoplastic resin additionally comprises a rubber-like polymer, the rubber-like polymer content of the resin may vary depending upon the method employed in the polymerization of the resin constituents as well as upon the particle size of the rubber-like polymer dispersed in the resulting thermoplastic resin. For instance, when the resin constituents are polymerized by the method of bulk polymerization, solution polymerization, suspension polymerization, bulk-solution polymerization or bulk-suspension polymerization, the particle size of the rubber-like polymer is preferably from 0.5 to 5 μm, more preferably 0.5 to 2 μm. The rubber-like polymer contnent of the resin in this case is preferably from 2 to 40%, more preferably from 3 to 20%, by weight When the resin constituents are polymerized by emulsion polymerization, emulsion-suspension polymerization or the like, the particle size of the rubber-like polymer is preferably from 0.05 to 1 μm and the rubber-like polymer content of the resin composition is from 5 to 70%, preferably from 10 to 60%, and more preferably from 20 to 50%, by weight. In order to achieve a well-balanced improvement in impact resistance, surface gloss, stress-cracking

resistance, processability, paintability and solvent resistance, which improvement is the main object of this invention, it is preferred to prepare the thermoplastic resin by emulsion polymerization and an outstanding result is obtained by using a rubber-like polymer containing 10% by weight or more of toluene insolubles. It is also possible to use a rubber-like polymer containing 70% by weight or more of toluene insolubles.

The impact resistant thermoplastic resin may be free from rubber-like polymer. In that case, the polymerization of resin constituents can be carried out by bulk polymerization, solution polymerization, suspension polymerization, bulk-solution polymerization, bulk-suspension polymerization, bulk polymerization-solution polymerization, emulsion polymerization or emulsion-suspension polymerization.

When a rubber-like polymer is used, the amount of the resin polymer grafted onto the rubber-like polymer that is, the degree of grafting (methyl ethyl ketone solvent) is preferably at least 10 parts by weight, more preferably from 30 to 200 parts by weight, per 100 parts by weight of the rubber-like polymer in view of the improvement in impact resistance, surface gloss, stress-cracking resistance and processability thereby achieved. The thickness of the resin polymer grafted onto the rubber-like polymer is preferably in the range of from 10 to 20 nm in order to achieve satisfactory surface gloss of the moulded article. The thickness of the grafted resin polymer can be determined from an electron photomicrograph according to the common method for observing the outer grafted resin polymer.

In the grafting of the resin constituents onto a rubber-like polymer by emulsion polymerization, the rubber-like polymer is used in the latex form. A rubber-like latex produced by emulsion polymerization can be used. It is also possible to use a rubber-like polymer latex formed by dissolving in the monomer and/or a solvent a solid rubber-like polymer obtained by other methods, and then emulsifying the resulting solution.

Preferred rubber-like polymer latices suitable for use in the present resin composition are: (1) a latex in which 70% by weight or more of the particles have a size of from 50 to 173 nm and the gel content (which is here defined to mean the toluene insolubles) is 50% by weight or more; (2) a latex in which 70% by weight or more of the particles have a size of from 173 to 440 nm and the gel content is 60% by weight or more; (3) a latex in which 50% by weight or more of the particles have size of from 440 nm or more and the gel content is from 70 to 20% by weight; (4) a mixture of the latices (1) and (2) in a weight ratio of from 5:95 to 50:50; (5) a mixture of the latices (2) and (3) in a weight ratio of from 95:5 to 5:95; or (6) a mixture of the latices (1) (2) and (3) in a ratio of from 0—50 : 95—40 : 5—60.

When latex (1) or (2) is used, the surface gloss processability and stress-cracking resistance are particularly good. When latex (3) is used, the impact strength is particularly good. When latex (4), (5) or (6) is used, the surface gloss, stress-cracking resistance, impact resistance and processability are particularly good. The thermoplastic resin has a higher impact resistance when prepared in the presence of a rubber-like polymer.

As mentioned previously, the impact resistant thermoplastic resin contains in the total free polymer the polymers (A) to (D) of differing alkenyl cyanide compound content as mentioned above. Such a composition can be obtained by polymerization of the resin constituents while varying the composition of the constituents. Such polymerization is carried out by polymerizing first a resin constituent mixture with a smaller alkenyl cyanide compound content, then polymerizing a resin constituent mixture with an increased alkenyl cyanide compound content. In this manner, polymerization is repeated while increasing stepwise the alkenyl cyanide compound content in the resin constituent mixture. The same effect can be achieved by other methods of polymerization, such as a method in which the alkenyl cyanide compound content of the resin constituent mixture is continuously increased; a method in which at first a resin constituent mixture higher in alkenyl cyanide compound content is polymerized followed by the polymerization of a resin constituent mixture having a lower alkenyl cyanide compound content, and polymerization is repeated in this manner while decreasing stepwise the alkenyl cyanide compound content of the resin constituent mixture; a method in which the polymerization is continued while decreasing continuously the alkenyl cyanide compound content in the resin constituent mixture; or a combination of the above methods. The relation between the monomer composition of the resin constituent mixture and the composition of the resulting resin polymer can be predicted through the widely known copolymer composition formula [e.g. T. Ohtsu, "Chemistry of Polymer Synthesis (Revised)", pp. 108—109, Kabushiki Kaisha Kagaku Dojin, 1979]. Accordingly, the impact resistant thermoplastic resin composition of this invention is obtained easily by suitably controlling the polymerization conditions including the monomer ratio.

The addition of monomers of the polymerization system containing a rubber-like polymer can be carried out in one of the following ways:

(a) Addition of the monomer mixture.
(b) Addition of each of the monomers separately without previously mixing the monomers together.
(c) Combination of (a) and (b).
(d) Stepwise addition of the monomers in two or more portions in the procedures (a), (b) and (c).
(e) Continuous addition of the monomers in the procedures (a), (b) and (c).
(f) Combinations of the procedures (a) to (e).

These procedures are adaptable to polymerization in the absence of a rubber-like polymer.

Auxiliary chemicals used in the polymerization of the resin constituent mixture by an emulsion polymerization mnethod include the following: Polymerization initiators, preferably redox-type initiators consisting of a combination of an oxidizing agent and a reducing agent; persulphates such as potassium

persulphate and ammonium persulphate; azobisisobutyronitrile; benzoyl peroxide and lauroyl peroxide. Especially preferred are redox-type initiators consisting of an organic hydroperoxide (oxidizing agent), representatives of which are cumene hydroperoxide, diisopropylbenze hydroperoxide, and *p*-menthane hydroperoxide, and a reducing agent, representatives of which are the sugar-containing pyrophosphate recipe, the sulphoxylate recipe, and a mixed sugar-containing pyrophosphate recipe-sulphoxylate recipe.

Chain transfer agents, preferably mercaptans such as octyl mercaptan, dodecyl mercaptan, t-dodecyl mercaptan and mercaptoethanol; terpenes; and halogenated hydrocarbons such as chloroform and carbon tetrachloride, may be used.

Emulsifiers, preferably resin acid salts such as potassium rosinate, sodium rosinate and the like; sodium and potassium salts of fatty acids such as potassium laurate, sodium laurate, sodium stearate and potassium stearate; sulphate esters of fatty alcohols such as sodium lauryl sulphate; and alkylarylsulphonates such as sodium dodecylbenzenesulphonate, may be used.

The composition distribution in the total free polymer in the present invention can be determined, for example, by the method described in Polymer Journal, Vol. 6, No. 6, 532—536 (1974) (described later in the Examples).

The resin can be used as a mixture of two or more such resins within the scope of the invention. The present resin can be moulded into various shaped articles by injection moulding, sheet extrusion, vacuum forming, profile extrusion or foam moulding.

When using the resin, known additives such as antioxidants, UV absorbers, lubricants, plasticizers, antistatics, foaming agents, glass fibres and the like may be blended therewith.

Further to comply with the required performance characteristics, the resin may be blended with other known polymers such as, for example, ABS resin, AS resin, polystyrene, rubber-modified polystyrene, styrene-methyl methacrylate copolymer, styrene-maleic anhydride copolymer, polybutadiene, butadiene-styrene copolymer, polyphenylene ether, acrylic rubber, ethylene-propylene copolymer, EPDM, styrene-butadiene block copolymer, styrene-butadiene-styrene block copolymer, styrene-butadiene-styrene radial block polymer, polypropylene, butadiene-acrylonitrile copolymer, polyvinyl chloride, polycarbonate, PET, PBT, polyacetal, polyamide, epoxy resin, polyvinylidene fluoride, polysulphone, ethylene-vinyl acetate copolymer, polyisoprene, natural rubber, chlorinated butyl rubber, chlorinated polyethylene, PPS resin, polyether etherketone.

The impact resistant thermoplastic resin of this invention, in which the total free polymer has specific total alkenyl cyanide compound content, can be converted into a thermoplastic resin composition having excellent heat resistance by combining it with a poly(phenylene ether). A desirable composition comprises from 5 to 90% by weight of a poly(phenylene ether), from 95 to 10% by weight of the thermoplastic resin, and from 0 to 85% by weight of other styrenic resin(s).

The poly(phenylene ether) used in the above composition may be obtained by the oxidative coupling polymerization, in the presence of a known catalyst, of at least one phenolic compound of formula :

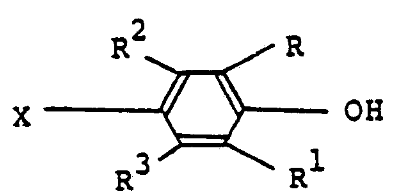

wherein X is hydrogen, chlorine, bromide, or iodine; R is a monovalent hydrocarbon group, hydrocarbonoxy group, halohydrocarbon group having at least 2 carbon atoms between the halogen atom and the phenol nucleus or halohydrocarbonoxy group; $R^1$ is the same as R or a halogen atom; each of $R^2$ and $R^3$ is the same as $R^1$ or a hydrogen atom, provided that R, $R^1$, $R^2$ and $R^3$ are free from tertiary carbon atoms.

Especially preferred among the above phenolic compounds are those represented by the general formula:

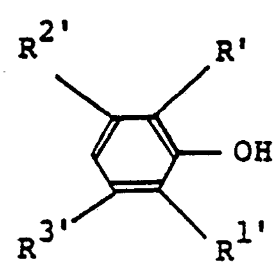

wherein each of R′ and $R^{1'}$ is a monovalent hydrocarbon group having from 1 to 8 carbon atoms and each of $R^{2'}$ and $R^{3'}$ is a hydrogen tom or a monovalent hydrocarbon group having from 1 to 8 carbon atoms. The most preferred phenolic compounds include 2,6-dimethylphenol, 2,6-diethylphenol, 2-methyl-6-ethylphenol, 2-methyl-6-allylphenol, 2-methyl-6-phenylphenol, 2,6-diphenylphenol, 2,6-dibutylphenol, 2-methyl-6-propylphenol, 2,3,6,-trimethylphenol and 2,3-dimethyl-6-ethylphenol.

The intrinsic viscosity [η] of the poly(phenylene ether) used in this invention (as measured in chloroform at 30°C) is not critical, but is preferably from 0.2 to 1, more preferably from 0.3 to 0.7 dl/g. The proportion of poly(phenylene ether) in the thermoplastic resin composition of this invention is from 5 to 90%, preferably from 10 to 60%, by weight. If the proportion is less than 5% by weight, no outstanding effect on the heat resistance is observed, whereas, if it exceeds 90% by weight, no improvement is observable in impact resistance and processability.

Styrenic resins suitable for use in the poly(phenylene ether)-containing compositon of this invention are polymers of aromatic alkenyl compounds or copolymers of aromatic alkenyl compounds with other copolymerizable monomers. Said aromatic alkenyl compounds and copolymerizable monomers include all of the compounds exemplified above with respect to aromatic alkenyl compounds, alkenyl cyanide compounds and copolymerizable alkenyl monomers suitable for use as the resin constituents. If necessary, the styrenic resins may also contain the rubber-like polymers exemplified above.

Suitable styrenic resins include polystyrene, polychlorostyrene, poly-α-methylstyrene, styrene-acrylonitrile copolymer, styrene-methyl methacrylate copolymer, styrene-maleic anhydride copolymer, styrene-α-methylstyrene copolymer, styrene-α-methylstyrene-methyl methacrylate copolymer, styrene-α-methyl-styrene acrylonitrile-methyl methacrylate copolymer, and rubber-modified products thereof. These resins can be used alone or in admixture of two or more. The acrylonitrile content of the styrenic resin is preferably 40% be weight or less, the methyl methacrylate content is preferably 80% by weight or less, and the styrene content is preferably 20% by weight or more. The proportion of the above styrenic resin in the thermoplastic resin composition of this invention is from 0 to 85% by weight. If the proportion exceeds 85% by weight, the composition has inferior paintability, heat resistance, impact resistance and surface gloss of the moulded article.

The thermoplastic resin composition of this invention comprising the impact resistant thermoplastic resin and the poly(phenylene ether) may be prepared by any of the following methods:

(1) A mixing method comprising dissolving or swelling each component in or with an organic solvent.

(2) A method comprising mixing each component in a mixer or the like, melt-mixing the resulting mixture in an extruder and then pelletizing the same.

(3) A method comprising adding a non-solvent to the mixture obtained in (1) above to recover a powder mixture, melt-mixing the powder mixture in an extruder and then pelletizing the same.

(4) A method comprising adding to the pellets obtained in (3) above a thermoplastic resin, a styrenic resin, a poly(phenylene ether) or the like, mixing them in a mixer or the like, melt-mixing the resulting mixture in an extruder and then pelletizing the same.

(5) A method comprising subjecting to injection moulding the pellets or powder obtained in (1) to (4) above alone or in admixture with each other or with other components, to form a moulded article.

The above treatment can be performed by means of known mixing machines such as a Banbury mixer and kneader. It is also possible to mix the above pellets with a thermoplastic resin, a styrenic resin, a poly(phenylene ether) or other resins, and melt-mix the resulting mixture in an extruder to produce a composition. The thermoplastic resin composition thus produced can be processed by injection moulding, sheet extrusion, vacuum forming, profile extrusion or form moulding, to obtain various shaped articles.

When using the thermoplatic resin composition, it may be blended with antioxidants, UV absorbers, lubricants, plasticizers, flame retardants, anti-statics, foaming agents and glass fibre which are in common use.

Effective flame retardants for the present thermoplastic resin composition are those compounds which contain: a halogen atom such as bromine or chlorine; antimony; phosphorus; or nitrogen, and these may preferably be used in combination with an auxiliary flame retardant such as antimony trioxide or the like.

Lubricants and plasticizers suitable for use in the present invention include higher alcohols and their derivatives, polyorganosiloxanes, paraffins, waxes, fatty acids, amide compounds, ketones, mineral oils, vegetable oils, low-molecular-weight styrenic polymers, metal soaps, amines, organic phosphite compounds, hydrazine compounds, aromatic acid derivatives, fatty acid derivatives, and sulphonic acid derivatives. At least one substance selected from these materials may be used.

Preferred lubricants are fatty acids, amide compounds, paraffins and waxes, higher alcohols, mineral oils, polyorganosiloxanes, low-molecular-weight polystyrene, metal soaps and styrene-acrylonitrile dimer. Of these, most preferred are higher alcohols, polyorganosiloxanes and metal soaps. Preferred plasticizers are organic phosphite compounds, hydrazine compounds, trimellitic acid derivatives, isophthalic acid derivatives, and stearic acid derivatives. Of these, especially preferred are organic phosphite compounds and hydrazine compounds.

The lubricant or plasticizer is preferably used in an amount of from 0.0001 to 10 parts by weight of total resin component in view of processability, heat resistance and mechanical strengths. Except for special lubricants, the amount is more preferably from 0.001 to 10, still more preferably from 0.01 to 10, and most preferably from 0.01 to 5, parts by weight.

The invention is illustrated below with reference to the Preparative Examples and Examples which are merely illustrative and not limitative. In the following Examples all parts and percentages are by weight, unless otherwise specified.

Preparative Example A

A polybutadiene latex for use in the preparation of a thermoplastic resin composition was obtained by the following procedure:

| Polybutadiene latex: | Parts |
|---|---|
| Butadiene | 100 |
| Distilled water | 150 |
| Potassium rosinate | 2.0 |
| Potassium hydroxide | 0.1 |
| Dodecyl mercaptan | 0.2 |
| Potassium persulphate | 0.3 |

The above mixture was charged into a pressure reactor and polymerization was started at 45°C. With an increase in conversion, the reaction temperature was elevated and finally reached 70°C. After 80 hours, the conversion reached 90%. After termination of the polymerization, the unreacted butadiene was removed with steam, to obtain a polybutadiene latex, which had the following gel content and particle size:

| | |
|---|---|
| Gel content (toluene insolubles) | 80% |
| Proportion of latex particles having a particle diameter of from 173 to 440 nm (as determined by the sodium alginate creaming method) | 85.1% |

Polymer No. 1 to Polymer No. 12 (Table 1) for use in the Examples and Comparative Examples were prepared from the above polybutadiene latex, styrene and acrylonitrile by emulsion polymerization. The polymerization was conducted in three steps. In the first step, it was allowed to proceed batchwise, and in the second and third steps, it was conducted while feeding the monomers continuously. The polymerization was effected until the polymerization conversion finally reached nearly 100%.

In the case of Polymer Nos. 1, 3, 6 and 7, the polymerization was conducted with the recipes shown in Table 2, and in the case of the other polymers (except Polymer No. 13), similar recipes were used to conduct the same polymerization, except that Polymer No. 11 was a styrene-acrylonitrile copolymer prepared by solution polymerization. Polymer No. 13 was prepared by the following method:

Into a stainless steel reactor provided with 4-stage paddles were charged 85 parts of butyl acrylate, 15 parts of 1,3-butadiene, 0.2 part of potassium stearate, 1.5 parts of potassium, 0.1 part of sodium alkylnaphthalenesulphonate, 0.1 part of potassium hydroxide, 1.5 parts of potassium chloride and 90 parts of ion-exchanged water, and the temperature of the contents was elevated, with stirring at 90 r.p.m. When the temperature reached 45°C, 0.25 part of potassium persulphate was added, and polymerization was thereafter conducted while maintaining the temperature constant at 45°C. When the polymerization conversion reached 90%, 0.1 part of diethylhydroxylamine was added to terminate the reaction, after which unreacted monomers were substantially removed by steam distillation, thereby obtaining an acrylic latex.

Polymer No. 13 was obtained by the same procedure as for obtaining Polymer Nos. 1 to 12, except that this acrylic latex was substituted for the polybutadiene latex.

The results obtained are shown in Table 1.

Table 1

| Polymer No. | Amount of rubber (%) | Acrylonitrile content of total free polymer (%) | Distribution of polymers different in acrylonitrile content in total free polymer (%) | | | | [η] of total free polymer (dl/g) |
|---|---|---|---|---|---|---|---|
| | | | 1% or more but less than 10% | 10% or more but less than 20% | 20% or more but less than 40% | 40% or more | |
| 1 | 20 | 25 | 11 | 23 | 66 | - | 0.45 |
| 2 | 20 | 20 | 19 | 34 | 47 | | 0.45 |
| 3 | 20 | 35 | 8 | 10 | 56 | 26 | 0.45 |
| 4 | 40 | 25 | 11 | 23 | 66 | - | 0.45 |
| 5 | 20 | 25 | 24 | 18 | 54 | 4 | 0.45 |
| 6 | 20 | 25 | - | - | 100 | - | 0.45 |
| 7 | 20 | 25 | - | 42 | 58 | - | 0.45 |
| 8 | 20 | 25 | 15.5 | 0.5 | 84 | - | 0.45 |
| 9 | 20 | 5 | 100 | - | - | - | 0.45 |
| 10 | 20 | 50 | 0.5 | 10 | 29.5 | 60 | 0.45 |
| 11 | - | 25 | 11 | 23 | 66 | - | 0.45 |
| 12 | - | 25 | - | - | 100 | - | 0.45 |
| 13 | 20 | 20 | 19 | 34 | 47 | | 0.45 |

Table 2. Polymerization recipe (3-step polymerization)

| Polymer No. | Styrene/acrylonitrile (parts) | | |
|---|---|---|---|
| | 1st step | 2nd step | 3rd step |
| 1 | 33.5/23.4 | 19.0/0.84 | 22.5/0.76 |
| 3 | 29.0/32.8 | 16.5/1.19 | 29.5/8.99 |
| 6 | 25.0/8.4 | 25.0/8.4 | 25.0/8.2 |
| 7 | 32.5/20 | 21.3/0.63 | 21.2/4.37 |

In Table 1, the acrylonitrile content of the total free polymer was calculated from the results of nitrogen analysis.

The distribution of polymers differing in acrylonitrile content in the total free polymer was determined by dissolving in methyl ethyl ketone a certain amount of a methyl ethyl ketone-soluble matter, adding to the resulting solution cyclohexane in small portions, fractionating the precipitated polymer in each stage, measuring the weight of each precipitated polymer, and calculating the acrylonitrile content of the polymer from the results of nitrogen analysis.

The intrinsic viscosity [η] was determined by measuring in methyl ethyl ketone at 30°C.

## Examples 1 to 7 and Comparative Examples 1 to 8

In the Examples and the Comparative Examples shown in Table 3, test moulded specimens of thermoplastic resins were prepared and evaluated as described below. The results obtained are summarized in Table 3.

(1) Compounding

The following ingredients were added to 100 parts of the polymer shown in Table 1 or the blend of polymers in the proportions shown in Table 3:

| | Parts |
|---|---|
| Magnesium stearate | 0.2 |
| Ethylenebisstearylamide | 0.7 |
| Distearylpentaerythritol phosphate | 0.15 |

They were mixed in a Henschel mixer and the resulting mixture was pelletized by means of an extruder.

(2) Evaluation

The pellets thus obtained were thoroughly dried and moulded into test specimens by injection moulding. The test specimens and pellets wre subjected to evaluation of surface gloss, stress-cracking resistance, impact resistance and processability.

(3) Method of evaluation

1. Surface gloss

Determined on a test specimen having a size of 80 × 40 × 3.2 mm according to the method of ASTM D—253.

2. Impact resistance

Notched impact resistance was tested at 23°C according to the method of ASTM D—256.

3. Processability

Pellets were subjected to a test of flow rate by means of "Koka-Type Flow Tester" under the following conditions: nozzle, 1 mm diameter, 2 mm length; temperature, 200°C; load, 30 kg.

4. Stress-cracking resistance

A notched test specimen having a size of 126.8 × 12.7 × 3.2 mm was immersed in an isopropanol-xylene (90:10 by weight) mixture under a constant stress of 94 $kg/cm^2$ and the time elapsed until the specimen failed was measured.

Table 3

| | Thermoplastic resin | Impact resistance (kg·cm/cm) | Processability ($x10^3$ $cm^3$/sec.) | Surface gloss (%) | Stress-cracking resistance (min.) |
|---|---|---|---|---|---|
| Example No. | | | | | |
| 1 | Polymer No. 1 100 | 32 | 20 | 95 | 15 |
| 2 | Polymer No. 2 100 | 30 | 24 | 95 | 15 |
| 3 | Polymer No. 3 100 | 30 | 19 | 92 | 15 |
| 4 | Polymer No. 5 100 | 32 | 20 | 95 | 15 |
| 5 | Polymer No. 4/ Polymer No. 11 = 50/50 | 32 | 20 | 95 | 15 |
| 6 | Polymer No. 11/ Polymer No. 6 = 50/50 | 13 | 26 | 93 | 14 |
| 7 | Polymer No. 4/ Polymer No. 12 = 50/50 | 30 | 19 | 93 | 14 |
| 8 | Polymer No. 13 100 | 30 | 25 | 96 | 15 |

Table 3 (Cont'd)

| | Thermoplastic resin | Impact resistance (kg·cm/cm) | Processability ($\times 10^3$ $cm^3$/sec.) | Surface gloss (%) | Stress-cracking resistance (min.) |
|---|---|---|---|---|---|
| Comparative Example No. | | | | | |
| 1 | Polymer No. 6 100 | 26 | 17 | 83 | 10 |
| 2 | Polymer No. 7 100 | 27 | 17 | 83 | 11 |
| 3 | Polymer No. 8 100 | 27 | 18 | 83 | 11 |
| 4 | Polymer No. 9 100 | 22 | 20 | 76 | 14 |
| 5 | Polymer No. 10 100 | 18 | 12 | 64 | 9 |
| 6 | Polymer No. 6/ Polymer No. 12 = 50/50 | 11 | 23 | 83 | 10 |
| 7 | Commercial ABS resin* | 50 | 8 | 85 | 10 |
| 8 | Polymer No. 7/ Polymer No. 9 = 90/10 | 25 | 24 | 81 | 9 |

Note: * Commercially available ABS resin: The total free polymer consists of polymers having acrylonitrile contents of 20% or more and less than 40%.

As is apparent from Table 3, the thermoplastic resins in which the alkenyl cyanide compound content in the total free polymer and/or the composition of polymers differing in alkenyl cyanide content are outside the ranges specified in this invention have inferior surface gloss of the moulded article, stress-cracking resistance and relatively inferior impact resistance and processability. As compared with them, the impact resistant thermoplastic resin of this invention has excellent surface gloss and good stress-cracking resistance, and processability.

Preparative Example B

A poly(phenylene ether) for use in the Examples and Comparative Examples was prepared in the following manner:

Preparation of poly(phenylene ether) (polymer A)

Into a stainless steel reactor provided with oxygen-blowing means at the bottom, a cooling coil and a stirrer, which had been thoroughly purged with nitrogen, were charged 53.6 g of cupric bromide, 1,110 g of dibutylamine and a solution of 8.75 kg of 2,6-xylenol in 40 litres of toluene. The mixture was stirred to form a uniform solution, and polymerization was carried out for 120 minutes while rapidly feeding oxygen into the reactor. During the polymerization, the temperature of the mixture was maintained at 30°C by circulating water through the cooling coil. At the end of the polymerization time, 30 litres of toluene was added to the polymerization mixture, and a 20% aqueous solution of 430 g of trisodium ethylenediaminetetraacetate was then added to terminate the polymerization. Methanol was added gradually to the polymer solution with vigorous stirring to form a slurry. The polymer was collected by filtration, washed thoroughly with methanol, filtered again and dried to obtain polymer A.

Preparation of thermoplastic resins and styrenic resins

The polybutadiene rubber-like polymer latices (Nos. 1—3) shown in Table 4 for use in the preparation of thermoplastic resins and styrenic resins were obtained by emulsion polymerization. Rubber-like polymer latex No. 4 is the acrylic latex used in the preparation of Polymer No. 3.

Table 4

| Rubber-like polymer latex No. | Particle diameter of polybutadiene latex | Gel content % |
|---|---|---|
| 1 | 50 - 173 nm, 91.4% | 85 |
| 2 | 173 - 440 nm, 85.1% | 80 |
| 3 | >440 nm, 74.5% | 48 |
| 4 | 173 - 440 nm, 89.2% | 78 |

The latex particle size shown in Table 4 was determined by a creaming method using sodium alginate (the percentage shown in Table 4 means the proportion of particles having the specified particle diameter range). The gel content means the weight % of toluene-insoluble matter obtained by coagulating the latex, drying the coagulum, dissolving the coagulum in toluene at room temperature (20°C) for 20 hours and filtering the resulting mixture through a 100-mesh (Tyler standard) screen.

Thermoplastic resins and styrenic resins (polymer B) for use in the Examples and Comparative examples were prepared by emulsion polymerization using the rubber-like polymer latices shown in Table 4, styrene and acrylonitrile with the recipe shown in Table 5. The polymerization was conducted in three steps. The first step is a batchwise polymerization, and, in the second and third steps, polymerization was conducted by continuously adding the monomers until the polymerization conversion finally reached nearly 100%.

Polymer B-1 was prepared by effecting the polymerization with the recipe shown in Table 6, and other polymers were prepared in a similar manner. The results obtained are shown in Table 5.

Table 5

| Polymer B | Rubber-like polymer latex | | Acrylonitrile content of total free polymer* (%) | Distribution of polymers different in acrylonitrile content in total free polymer (%) | | | |
|---|---|---|---|---|---|---|---|
| | Type | Amount (parts) | | 1% or more but less than 10% | 10% or more but less than 20% | 20% or more but less than 40% | 40% or more |
| B-1 | 2 | 40 | 25 | 8 | 12 | 80 | 0 |
| B-2 | 2 | 40 | 25 | 16 | 5 | 79 | 0 |
| B-3 | 2 | 60 | 25 | 8 | 12 | 80 | 0 |
| B-4 | 2 | 40 | 30 | 5 | 8 | 85 | 2 |
| B-5 | 2 | 40 | 20 | 15 | 38 | 47 | 0 |
| B-6 | 2 | 40 | 15 | 21 | 58 | 21 | 0 |
| B-7 | 2 | 20 | 25 | 8 | 12 | 80 | 0 |
| B-8 | 1 | 40 | 25 | 8 | 12 | 80 | 0 |
| B-9 | 3 | 40 | 25 | 8 | 12 | 80 | 0 |
| B-10 | - | - | 25 | 8 | 12 | 80 | 0 |
| B-11 | 2 | 40 | 25 | 0 | 0 | 100 | 0 |
| B-12 | 2 | 40 | 15 | 1 | 99 | 0 | 0 |

Table 5 (Cont'd)

| Polymer B | Rubber-like polymer latex | | Acrylonitrile content of total free polymer* (%) | Distribution of polymers different in acrylonitrile content in total free polymer (%) | | | |
|---|---|---|---|---|---|---|---|
| | Type | Amount (parts) | | 1% or more but less than 10% | 10% or more but less than 20% | 20% or more but less than 40% | 40% or more |
| B-13 | 2 | 40 | 5 | 100 | - | - | - |
| B-14 | 2 | 40 | 50 | 2 | 10 | 30 | 60 |
| B-15 | 2 | 40 | 25 | 0 | 10 | 90 | 0 |
| B-16 | 2 | 40 | 20 | 60 | 5 | 85 | 0 |
| B-30 | 4 | 40 | 20 | 60 | 5 | 85 | 0 |

Note: * The acrylonitrile content of the total free polymer was determined from the results of nitrogen analysis.

** The distribution of polymers different in acrylonitrile content in the total free polymer was determined by dissolving in methyl ethyl ketone a certain amount of a methyl ethyl ketone soluble matter, adding to the resulting solution cyclohexane in small portions, fractionating the precipitated polymer in each stage, measuring the weight of each precipitated polymer and calculating the acrylonitrile content of the polymer from the results of nitrogen analysis.

Table 6 Polymerization recipe (3-step polymerization)

| | Styrene/acrylonitrile (parts) | | |
|---|---|---|---|
| | 1st step | 2nd step | 3rd step |
| Polymer B-1 | 33.5/22.9 | 19.0/1.34 | 22.5/0.76 |

The thermoplastic resins and styrenic resins (polymer B) for use in the Examples and Comparative Examples were prepared by solution polymerization of polybutadiene (JSR BR-02L), styrene and acrylonitrile with the recipes shown in Table 7.

Table 7

| Polymer B | Polymer composition | Amount of rubber (%) | Acrylonitrile content of resinous polymer (%) | Composition distribution of acrylonitrile in total free polymer (%) | | | |
|---|---|---|---|---|---|---|---|
| | | | | 1% or more but less than 10% | 10% or more but less than 20% | 20% or more but less than 40% | 40% or more |
| B-17 | Styrene-acrylonitrile copolymer | - | 10 | 60 | 40 | 0 | 0 |
| B-18 | Styrene-acrylonitrile copolymer | - | 25 | 0 | 0 | 100 | 0 |
| B-19 | Polystyrene | - | - | - | - | - | - |
| B-20 | Polybutadiene-styrene copolymer | 10 | - | - | - | - | - |
| B-21 | Polybutadiene-styrene-acrylonitrile copolymer | 10 | 25 | 8 | 12 | 80 | - |
| B-22 | Styrene-acrylonitrile copolymer | - | 5 | 100 | - | - | - |

Examples 8 to 26 and Comparative Examples 9 to 18

The polymers described previously were blended in the ratios shown in Table 8. Each blend was extruded from a twin-screw kneader-extruder at 260° to 300°C and pelletized. The thoroughly dried pellets were moulded at 240° to 280°C by means of an injection moulding machine to obtain test specimens for testing impact resistance, heat resistance, surface gloss, paintability and solvent resistance. The results obtained by measurement in the following test manner are shown in Table 8:

Method of evaluation

(1) Heat resistance: A test specimen of 0.25 inch (0.6 cm) thickness was annealed at 100°C for 2 hours, and the deflection temperature under a load of 264 psi (19 $kg/cm^2$) was measured according to the method of ASTM D-648.

(2) Impact resistance: Measurement was performed on a notched specimen of 0.25 inch (0.6 cm) thickness according to the method of ASTM D-256.

(3) Surface gloss: The surface gloss of the moulded articles was visually evaluated according to the following criteria:

◎ Excellent

○ Good

△ Fair

× Poor

(4) Paintability: The moulded article (plate form) was coated using the following coating material produced by Origin Electric Co., Ltd. and thinner.

Coating material: "Planet AH" (trade name).

Thinner: "Planet #201" (trade name).

The coated surface was visually inspected for cracking, crazing, absorption and appearance and evaluated according to the following criteria

◎ Excellent.

○ Good

△ Fair

× Poor

(5) Chemical resistance: The specimen for testing the deflection temperature under load was immersed in gasoline for 5 hours. Then the surface was inspected for cracking and the swelling degree was measured. The appearance was visually inspected for cracking and evaluated according to the following criteria:

◎ Excellent

○ Good

△ Fair

× Poor

$$\text{Degree of swelling in gasoline (\%)} = \frac{\left(\begin{array}{c}\text{Weight after immersion}\\ \text{in gasoline for}\\ \text{5 hours}\end{array}\right) - \left(\begin{array}{c}\text{Weight before}\\ \text{immersion in}\\ \text{gasoline}\end{array}\right)}{\text{Weight before immersion in gasoline}} \times 100$$

Table 8

| | Blending ratio (parts) | | | | | Rubber content (%) | Result of evaluation | | | | | |
|---|---|---|---|---|---|---|---|---|---|---|---|---|
| | Polymer A (parts) | Thermoplastic resin | | Styrenic resin | | | Impact resistance (kg·cm/cm) | Deflection temp. (°C) | Gloss | Solvent resistance | | |
| | | Polymer | Parts | Polymer | Parts | | | | | Appearance | Swelling degree (%) | Painting |
| Example No. 8 | 40 | B-1 | 45 | B-18<br>B-19 | 7.5<br>7.5 | 18 | 37 | 136 | ◎ | ◎ | 3 | ◎ |
| 9 | 40 | B-2 | 45 | B-18<br>B-19 | 7.5<br>7.5 | 18 | 37 | 136 | ◎ | ◎ | 3 | ◎ |
| 10 | 40 | B-4 | 45 | B-18<br>B-19 | 7.5<br>7.5 | 18 | 40 | 138 | ◎ | ◎ | 2 | ◎ |
| 11 | 40 | B-5 | 45 | B-18<br>B-19 | 7.5<br>7.5 | 18 | 37 | 136 | ◎ | ◎ | 3 | ◎ |
| 12 | 40 | B-6 | 45 | B-18<br>B-19 | 7.5<br>7.5 | 18 | 32 | 132 | ◎ | ◎ | 6 | o |
| 13 | 40 | B-8 | 45 | B-18<br>B-19 | 7.5<br>7.5 | 18 | 24 | 136 | ◎ | ◎ | 2 | ◎ |
| 14 | 40 | B-9 | 45 | B-18<br>B-19 | 7.5<br>7.5 | 18 | 48 | 136 | ◎ | ◎ | 4 | ◎ |
| 15 | 40 | B-1<br>B-10 | 45<br>75 | B-19 | 7.5 | 18 | 38 | 137 | ◎ | ◎ | 2 | ◎ |

Table 8 (Cont'd)

| | Blending ratio (parts) | | | | | Rubber content (%) | Result of evaluation | | | | | |
|---|---|---|---|---|---|---|---|---|---|---|---|---|
| | Polymer A (parts) | Thermoplastic resin | | Styrenic resin | | | Impact resistance (kg·cm/cm) | Deflection temp. (°C) | Gloss | Solvent resistance | | |
| | | Polymer | Parts | Polymer | Parts | | | | | Appearance | Swelling degree (%) | Painting |
| 16 | 40 | B-1 | 45 | B-19 | 15 | 18 | 35 | 132 | ○ | ○ | 6 | ○ |
| 17 | 40 | B-1 | 45 | B-18 | 15 | 18 | 33 | 130 | ○ | ◎ | 3 | ◎ |
| 18 | 40 | B-1 | 45 | B-17 | 15 | 18 | 37 | 136 | ◎ | ◎ | 3 | ◎ |
| 19 | 40 | B-1 | 45 | B-22 | 15 | 18 | 37 | 136 | ◎ | ◎ | 3 | ◎ |
| 20 | 40 | B-3 | 30 | B-18<br>B-19 | 15<br>15 | 18 | 34 | 134 | ○ | ◎ | 4 | ◎ |
| 21 | 40 | B-7 | 60 | — | — | 12 | 26 | 138 | ◎ | ◎ | 2 | ◎ |
| 22 | 60 | B-1 | 30 | B-18<br>B-19 | 5<br>5 | 12 | 24 | 160 | ◎ | ◎ | 4 | ◎ |
| 23 | 20 | B-1 | 45 | B-18<br>B-19 | 17.5<br>17.5 | 18 | 37 | 116 | ◎ | ◎ | 3 | ◎ |
| 24 | 40 | B-10 | 15 | B-11<br>B-19 | 30<br>15 | 12 | 30 | 139 | ◎ | ◎ | 3 | ◎ |
| 25 | 40 | B-10 | 15 | B-13 | 45 | 18 | 37 | 136 | ◎ | ◎ | 3 | ◎ |
| 26 | 40 | B-21 | 60 | — | — | 6 | 20 | 136 | ○ | ○ | 4 | ○ |

Table 8 (Cont'd)

| | Blending ratio (parts) | | | | | Rubber content (%) | Result of evaluation | | | | | |
|---|---|---|---|---|---|---|---|---|---|---|---|---|
| | Polymer A (parts) | Thermoplastic resin | | Styrenic resin | | | Impact resistance (kg·cm/cm) | Deflection temp. (°C) | Gloss | Solvent resistance | | |
| | | Polymer | Parts | Polymer | Parts | | | | | Appearance | Swelling degree (%) | Painting |
| Comparative Example No. 9 | 40 | — | | B-20 | 60 | 6 | 12 | 112 | x | x | 12 | x |
| 10 | 40 | — | | B-11<br>B-18<br>B-19 | 45<br>7.5<br>7.5 | 18 | | 92 | x | x | 8 | x |
| 11 | 40 | — | | B-11<br>B-22<br>B-19 | 45<br>7.5<br>7.5 | 18 | 34 | 134 | ◎ | ◎ | 4 | Δ |
| 12 | 40 | B-14 | 45 | B-18<br>B-19 | 7.5<br>7.5 | 18 | 16 | 107 | x | o | 4 | Δ |
| 13 | 40 | B-15 | 45 | B-18<br>B-19 | 7.5<br>7.5 | 18 | 17 | 106 | x | Δ | 10 | Δ |
| 14 | 40 | B-16 | 45 | B-18<br>B-19 | 7.5<br>7.5 | 18 | 28 | 134 | Δ | Δ | 10 | x |
| 15 | 2 | B-1 | 45 | B-18<br>B-19 | 26.5<br>26.5 | 18 | 37 | 94 | Δ | Δ | 8 | Δ |
| 16 | 95 | B-1 | 5 | — | | 2 | 8 | 180 | x | x | 10 | x |
| 17 | 40 | B-12 | 60 | — | | 24 | 36 | 126 | ◎ | ◎ | 10 | Δ |
| 18 | 40 | B-12 | 15 | B-11<br>B-13<br>B-19 | 15<br>15<br>15 | 18 | 30 | 137 | ◎ | ◎ | 4 | Δ |

**Claims**

1. An impact resistant thermoplastic resin which is obtained by polymerizing, in the presence or absence of a rubber-like polymer, a resin constituent mixture comprising an aromatic alkenyl compound, an alkenyl cyanide compound, and optionally other alkenyl monomer(s) copolymerizable therewith, characterized in that said composition contains from 5 to 100% by weight of methyl ethyl ketone-soluble matter (total free polymer), and that this total free polymer comprises:

(A) from 1 to 50% by weight of a polymer having an alkenyl cyanide compound content of 1% or more but less than 10% by weight;

(B) from 1 to 70% by weight of a polymer having an alkenyl cyanide compound content of 10% or more but less than 20% by weight;

(C) from 5 to 90% by weight of a polymer having an alkenyl cyanide compound content of 20% or more but less than 40% by weight; and

(D) from 0 to 70% by weight of a polymer having an alkenyl cyanide compound content of 40% by weight or more,

and has a total alkenyl cyanide compound content of from 10 to 40% by weight.

2. An impact resistant thermoplastic resin according to Claim 1, wherein the total free polymer has an intrinsic viscosity of from 0.1 to 1.5 dl/g as determined in methyl ethyl ketone at 3°C.

3. An impact resistant thermoplastic resin according to Claim 1 or 2, wherein the rubber-like polymer is a poly-α-olefin, an ethylene-α-olefin copolymer, an ethylene-unsaturated carboxylate ester copolymer, an ethylene-saturated fatty acid vinyl ester copolymer, an ethylene-propylene-nonconjugated diene terpolymer, a diene rubber, a butylene-isoprene copolymer, acrylic rubber or a hydrogenation product of alkenylbenzenediolefin block copolymer.

4. An impact resistant thermoplastic resin according to Claim 1 or 2, wherein rubber-like polymer is an ethylene-propylene-nonconjugated diene terpolymer, acrylic rubber or a diene rubber.

5. An impact resistant thermoplastic resin according to Claim 1 or 2, wherein the rubber-like polymer is polybutadiene, acrylic rubber or styrene-butadiene copolymer.

6. An impact resistant thermoplastic resin according to any one of the preceding Claims, wherein the rubber-like polymer contains 10% by weight or more of toluene-insoluble matter.

7. An impact resistant thermoplastic resin according to any one of the preceding Claims, wherein the aromatic alkenyl compound is at least one of styrene, α-methylstyrene, *p*-methylstyrene, vinylxylene, monochlorostyrene, dichlorostyrene, monobromostyrene, dibromostyrene, p-t-butylstyrene, ethylstyrene and vinylnaphthalene.

8. An impact resistant thermoplastic resin according to any one of Claims 1 to 6, wherein the aromatic alkenyl compound is styrene.

9. An impact resistant thermoplastic resin according to any one of the preceding Claims, wherein the alkenyl cyanide compound is acrylonitrile or methacrylonitrile.

10. An impact resistant thermoplastic resin according to Claim 8, wherein the alkenyl cyanide compound is acrylonitrile.

11. An impact resistant thermoplastic resin according to any one of the preceding Claims, wherein the other alkenyl monomer copolymerizable with the aromatic alkenyl compound and the alkenyl cyanide compound is at least one of alkyl acrylates, alkyl methacrylates, unsaturated acid anhydrides and unsaturated acids.

12. An impact resistant thermoplastic resin according to any of the preceding Claims, wherein the amount of the resinous polymer grafted onto the rubber-like polymer is from 30 to 200 parts by weight per 100 parts by weight of the rubber-like polymer.

13. An impact resistant thermoplastic resin according to any of the preceding Claims, wherein the total free polymer comprises from 1 to 50% by weight of polymer (A), from 5 to 70% by weight of polymer (B), from 10 to 90% by weight of polymer (C), and from 0 to 70% by weight of polymer (D).

14. An impact resistant thermoplastic resin according to Claim 13, wherein the total free polymer comprises from 5 to 30% by weight of polymer (A), from 7 to 50% by weight of polymer (B), from 30 to 80% by weight of polymer (C), and from 0 to 20% by weight of polymer (D).

15. An impact resistant thermoplastic resin according to any one of the preceding Claims which contains the total free polymer in a proportion of from 15 to 100% by weight.

16. A thermoplastic resin composition comprising:

(i) from 10 to 95% by weight of an impact resistant thermoplastic resin as claimed in any one of the preceding Claims;

(ii) from 5 to 90% by weight of a poly(phenylene ether); and

(iii) from 0 to 85% by weight of other styrenic resin(s).

17. A thermoplastic resin composition according to Claim 16, wherein the poly(phenylene ether) is a compound obtained by the oxidative coupling polymerization, in the presence of a catalyst, of at least one phenolic compound of formula:

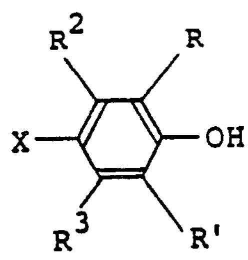

wherein X is hydrogen, chlorine, bromine or iodine; R is a monovalent hydrocarbon group, hydrocarbonoxy group, halohydrocarbon group having at least 2 carbon atoms between the halogen atom and the phenol nucleus or halohydrocarbonoxy group having at least 2 carbon atoms between the halogen atom and the phenol nucleus; $R^1$ is the same as R or a halogen atom; and each of $R^2$ and $R^3$ is the same as $R^1$ or a hydrogen atom, provided that R, $R^1$, $R^2$, and $R^3$ are free from tertiary carbon atoms.

18. A thermoplastic resin composition according to Claim 17, wherein the phenolic compound is a compound of formula:

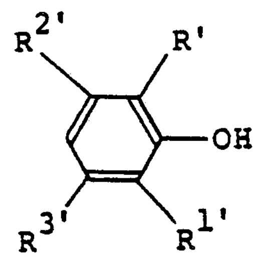

wherein each of R′ and $R^{1'}$ is a monovalent hydrocarbon group having from 1 to 8 carbon atoms; and each of $R^{2'}$ and $R^{3'}$ is a monovalent hydrocarbon group having from 1 to 8 carbon atoms or a hydrogen atom.

19. A thermoplastic resin composition according to Claim 17, wherein the phenolic compound is at least one of 2,6-dimethylphenol, 2,6-diethylphenol, 2-methyl-6-ethylphenol, 2-methyl-6-allylphenol, 2-methyl-6-phenylphenol, 2,6-diphenylphenol, 2,6-dibutylphenol, 2-methyl-6-propylphenol, 2,3,6-trimethylphenol and 2,3-dimethyl-6-ethylphenol.

20. A thermoplastic resin composition according to any one of Claims 16 to 19, wherein the poly(phenylene ether) has an intrinsic viscosity of from 0.2 to 1 dl/g as measured in chloroform at 30°C.

21. A thermoplastic resin composition according to any one of Claims 16 to 20, wherein the amount of the poly(phenylene ether) is 10 to 60% by weight.

22. A thermoplastic resin composition according to any one of Claims 16 to 21, wherein the other styrenic resin is at least one of polystyrene, polychlorostyrene, poly-α-methylstyrene, styrene-acrylonitrile copolymer, styrene-methyl methacrylate copolymer styrene-α-methylstyrene copolymer, styrene-α-methylstyrene-methyl methacrylate copolymer, styrene-α-methylstyrene-acrylonitrile-methyl methacrylate copolymer, and rubber-modified products thereof.

**Patentansprüche**

1. Schlagfester, thermoplastischer Kunststoff, welcher durch Polymerisation einer einen Kunststoff bildenden Mischung in Gegenwart oder Abwesenheit eines kautschukähnlichen Polymers erhalten wird, wobei die Mischung eine aromatische Alkenyl-Verbindung, eine Alkenylcyanid-Verbindung und gegebenenfalls ein oder mehrere andere, copolymerisierbare Alkenylmonomere umfaßt, dadurch gekennzeichnet, daß die Mischung 5—100 Gew. % einer methylethylketon-löslichen Masse (gesamtes freies Polymer) enthält und daß dieses gesamte freie Polymer folgende Komponenten enthält:

(A) 1—50 Gew. % eines Polymers mit einem Gehalt an einer Alkenylcyanid-Verbindung von 1 Gew. % oder mehr, jedoch weniger als 10 Gew. %;

(B) 1—70 Gew. % eines Polymers mit einem Gehalt an einer alkenylcyanid-Verbindung von 10 Gew. % oder mehr, jedoch weniger als 20 Gew. %;

(C) 5—90 Gew. % eines Polymers mit einem Gehalt an einer Alkenylcyanid-Verbindung von 20 Gew. % oder mehr, jedoch weniger als 40 Gew. %; und

(D) 0—70 Gew. % eines Polymers mit einem Gehalt an einer Alkenylcyanid-Verbindung von 40 Gew. % oder mehr

und einen Gesamtgehalt an Alkenylcyanid-Verbindung von 10 bis 40 Gew. % aufweist.

2. Schlagfester, thermoplastischer Kunststoff nach Anspruch 1, wobei das gesamte freie Polymer eine Grundviskosität von 0,1—0,5 dl/g, bestimmbar in Methylethylketon bei 3°C, aufweist.

3. Schlagfester, thermoplastischer Kunststoff nach Anspruch 1 oder 2, wobei das kautschukähnliche Polymer ein Poly- -Olefin, ein Ethylen- -Olefincopolymeres, ein Copolymeres aus Ethylen und einem ungesättigten Carboxylatester, ein Copolymeres aus Ethylen und einem Vinylester einer gesättigten

Fettsäure, ein Terpolymeres aus Ethylen, Propylen und einem nicht konjugierten Dien, ein Dien-Kautschuk, ein Butylen-Isopren-Copolymeres, ein Acryl-Kautschuk oder ein Hydrierungsprodukt eines Alkenylbenzol-Diolefin-Block-Polymeren ist.

4. Schlagfester, thermoplastischer Kunststoff nach Anspruch 1 oder 2, wobei das kautschukähnliche Polymer ein Terpolymer aus Ethylen, Propylen und einem nicht konjugierten Dien, ein Acryl-Kautschuk oder ein Dien-Kautschuk ist.

5. Schlagfester, thermoplastischer Kunststoff nach Anspruch 1 oder 2, wobei das kautschukähnliche Polymer Polybutadien Acryl-Kautschuk oder ein Styrol-Butadien-Copolymeres ist.

6. Schlagfester, thermoplastischer Kautschuk nach einem der voranstehenden Ansprüche, wobei das kautschukähnliche Polymer 10 Gew. % oder mehr einer toluolunlöslichen Masse enthält.

7. Schlagfester, thermoplastischer Kunststoff nach einem der voranstehenden Ansprüche, wobei die aromatische Alkenyl-Verbindung mindestens eine aus der Gruppe Styrol, α-Methylstyrol, p-Methylstyrol, Vinylxylol, Monochlorstyrol, Dichlorstyrol, Monobromstyrol, Dibromstyrol, p-t-Butylstyrol, Ethylstyrol und Vinylnaphthalin ist.

8. Schlagfester, thermoplastischer Kunststoff nach einem der Ansprüche 1 bis 6, wobei die aromatische Alkenyl-Verbindung Styrol ist.

9. Schlagfester, thermoplastischer Kunststoff nach einem der voranstehenden Ansprüche, wobei die Alkenylcyanid-Verbindung Acrylnitril oder Methacrylnitril ist.

10. Schlagfester, thermoplastischer Kunststoff nach Ansprüche 8, wobei die Alkenylcyanid-Verbindung Acrylnitril ist.

11. Schlagfester, thermoplastischer Kunststoff nach einem der voranstehenden Ansprüche, wobei das andere mit der aromatischen Alkenyl-Verbindung copolymerisierbare Alkenyl-Monomer und die Alkenylcyanid-Verbindung mindestens eine Verbindung aus der Reihe Alkylacrylate, alkylmethacrylate, ungesättigte Säureanhydride und ungesättigte Säuren ist.

12. Schlagfester, thermoplastischer Kunststoff nach einem der voranstehenden Ansprüche, wobei der Anteil des an das kautschukähnliche Polymer anpolymerisierten Harz-Polymeren 30—200 Gewichtsteile pro 100 Gewichtsteile des kautschukähnlichen Polymers beträgt.

13. Schlagfester, thermoplastischer Kunststoff nach einem der voranstehenden Ansprüche, wobei das gesamte freie Polymer 1—50 Gew. % des Polymers (A), 5—70 Gew. % des Polymers (B), 10—90% des Polymers (C) und 0—70 Gew. % des Polymers (D) umfaßt.

14. Schlagfester, thermoplastischer Kunststoff nach Anspruch 13, dadurch gekennzeichnet, daß das gesamte freie Polymer 5—30 Gew. % des Polymers (A), 7—50 Gew. % des Polymers (B), 30—80 Gew. % des Polymers (C) und 0—20 Gew. % des Polymers (D) umfaßt.

15. Schlagfester, thermoplastischer Kunststoff nach einem der voranstehenden Ansprüche, wobei das gesamte freie Polymer mit einem Anteil von 50—100 Gew. % enthalten ist.

16. Thermoplastische Kunststoffmischung, welche umfaßt:

(i) 10—95 Gew. % eines schlagfesten thermoplastischen Kunststoffs gemäß einem der Voranstehenden Ansprüche;

(ii) 5—90. % eines Polyphenylenethers; und

(iii) 0—85 Gew. % eines oder mehrerer anderer Styrolharze.

17. Thermoplastische Kunststoffmischung nach Anspruch 16, wobei der Polyphenylenether eine Verbindung ist, die durch eine oxidative Kupplungspolymerisation in Gegenwart eines Katalysators aus mindestens einer phenolischen Verbindung der allgemeinen Formel erhältlich ist:

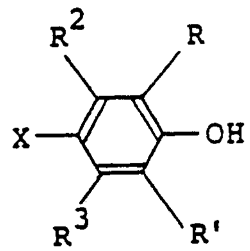

wobei X Wasserstoff, Chlor, Brom oder Jod ist; wobei R ein monovalentes Kohlenwasserstoffradical, eine Kohlenwasserstoffoxy-Gruppe, eine Halogen-Kohlenwasserstoff-Gruppe mit mindestens zwei Kohlenstoffatomen zwischen dem Halogen-Atom und dem Phenol-Kern oder eine Halogen-Kohlenwasserstoffoxy-Gruppe mit mindestens zwei Kohlenstoffatomen zwischem dem Halogen-Atom und dem Phenol-Kern ist; $R^1$ gleich wie R oder ein Halogen-Atom ist; und wobei jeder der Reste $R^2$ und $R^3$ derselbe ist wie $R^1$ oder ein Wasserstoffatom, vorausgesetzt die Reste R, $R^1$, $R^2$ und $R^3$ enthalten keine tertiären Kohlenstoffatome.

18. Thermoplastische Kunststoffmischung gemäß Anspruch 17, wobei die phenolische Verbindung eine Verbindung der allgemeinen Formel ist:

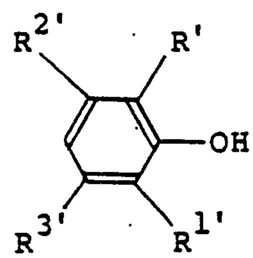

wobei jeder der Reste R′ und $R^{1'}$ ein monovalenter Kohlenwasserstoffrest mit einem bis 8 Kohlenstoffatomen ist; und wobei jeder der Reste $R^{2'}$ und $R^{3'}$ ein monovalenter Kohlenwasserstoffrest mit einem bis 8 Kohlenstoffatomen oder ein Wasserstoffatom ist.

19. Thermoplastische Kunststoffmischung nach Anspruch 17, wobei die phenolische Verbindung mindestens eine der folgenden Verbindungen ist 2,6-Dimethylphenol, 2,6-Diethylphenol, 2-Methyl-6-ethylphenol, 2-Methyl-6-allylphenol, 2-Methyl-6-phenylphenol, 2,6-Diphenylphenol, 2,6-Dibutylphenol, 2-Methyl-6-propylphenol, 2,3,6-Trimethylphenol und 2,3-Dimethyl-6-ethylphenol.

20. Thermoplastische Kunststoffmischung nach einem der Ansprüche 16 bis 19, wobei der Polyphenylenether eine Grundviskosität von 0,2—1 dl/g, gemessen in Chloroform bei 30°C, aufweist.

21. Thermoplastische Kunststoffmischung nach einem der Ansprüche 16—20, wobei die Menge des Polyphenylenethers 10—60 Gew. % beträgt.

22. Thermoplastische Kunststoffmischung nach einem der Ansprüche 16—21, wobei das andere Styrolharz mindestens eines aus der Reihe der folgenden Verbindungen ist: Polystyrol, Polychlorostyrol, Poly-α-methylstyrol, Styrolacrylnitril-Copolymer, Styrol-methylmethycrylat-Copolymer, Styrol-α-methylstyrol-Copolymer, Styrol-α-methylstyrol-methylmethacrylat-Copolymer, Styrol-α-methylstyrol-acrylnitril-methylmethacrylat-Copolymer und kautschukmodifizierte Produkte hiervon.

**Revendications**

1. Résine thermoplastique résistant au choc, obtenue par polymérisation, en présence ou en absence d'un polymère caoutchouteux, d'un mélange de composants de résine comprenant un composé aralcénylique, un cyanure d'alcényle et éventuellement un autre(d'autres) monomère(s) alcénylique(s) copolymérisable(s) avec ceux-ci, caractérisée en ce que ladite composition contient de 5 à 100% en poids de matières solubles dans la méthyléthylcétone (polymère libre total) et en ce que ce polymère libre total comprend:

(A) de 1 à 50% en poids d'un polymère ayant une teneur en cyanure d'alcényle de 1% ou plus mais inférieure à 10% en poids;

(B) de 1 à 70% en poids d'un polymère ayant une teneur en cyanure d'alcényle de 10% ou plus mais inférieure à 20% en poids;

(C) de 5 à 90% en poids d'un polymère ayant une teneur en cyanure d'alcényle de 20% ou plus mais inférieure à 40% en poids; et

(D) de 0 à 70% en poids d'un polymère ayant une teneur en cyanure d'alcényle de 40% en poids ou plus, et a une teneur totale en cyanure d'alcényle allant de 10 à 40% en poids.

2. Résine thermoplastique résistant au choc selon la revendication 1, dans laquelle le polymère libre total a une viscosité intrinséque de 0,1 à 1,5 dl/g, telle que déterminée dans la méthyléthylcétone à 3°C.

3. Résine thermoplastique résistant au choc selon la revendication 1 ou 2, dans laquelle le polymère caoutchouteux est une poly-α-oléfine, un copolymère, éthylène/α-oléfine, un copolymère éthylène/ester d'acide carboxylique insaturé, un copolymère éthylène/ester vinylique d'acide gras saturé, un terpolymère éthylène/propylène/diène non conjugué, un caoutchouc diène, un copolymère butylène/isoprène, un caoutchouc acrylique ou un produit d'hydrogénation d'un copolymère séquencé alcénylbenzène/dioléfine.

4. Résine thermoplastique résistant au choc selon la revendication 1 ou 2, dans laquelle le polymère caoutchouteux est un terpolymère éthylène/propylène/diène non conjugué, un caoutchouc acrylique ou un caoutchouc diène.

5. Résine thermoplastique résistant au choc selon la revendication 1 ou 2, dans laquelle le polymère caoutchouteux est le polybutadiène, un caoutchouc acrylique ou un copolymère styrène/butadiène.

6. Résine thermoplastique résistant au choc selon l'une quelconque des revendications précédentes, dans laquelle le polymère caoutchouteux contient 10% en poids ou plus de matière insoluble dans le toluène.

7. Résine thermoplastique résistant au choc selon l'une quelconque des revendications précédentes, dans laquelle le composé aralcénylique est au moins l'un parmi le styrène, l'α-méthylstyrène, le p-méthylstyrène, le vinylxylène, le monochlorostyrène, le dichlorostyrène, le monobromostyrène, le dibromostyrène, le p-tert-butylstyrène, l'éthylstyrène et le vinylnaphtalène.

8. Résine thermoplastique résistant au choc selon l'une quelconque des revendications 1 à 6, dans laquelle le composé aralcénylique est le styrène.

9. Résiné thermoplastique résistant au choc selon l'une quelconque des revendications précédentes, dans laquelle le cyanure d'alcényle est l'acrylonitrile ou le méthacrylonitrile.

10. Résine thermoplastique résistant au choc selon la revendication 8, dans laquelle le cyanure d'alcényle est l'acrylonitrile.

11. Résine thermoplastique résistant au choc selon l'une quelconque des revendications précédentes, dans laquelle l'autre monomère alcénylique copolymérisable avec le composé aralcénylique et le cyanure d'alcényle est au moins l'un parmi des acrylates d'alkyle, des méthacrylates d'alkyle, des anhydrides d'acides insaturés et des acides insaturés.

12. Résine thermoplastique résistant au choc selon l'une quelconque des revendications précédentes, dans laquelle la quantité du polymère résineux greffé sur le polymère caoutchouteux est de 30 à 200 parties en poids pour 100 parties en poids du polymère caoutchouteux.

13. Résine thermoplastique résistant au choc selon l'une quelconque des revendications précédentes, dans laquelle le polymère libre total comprend de 1 à 50% en poids de polymère (A), de 50 à 70% en poids de polymère (B), de 10 à 90% en poids de polymère (C) et de 0 à 70% en poids de polymère (D).

14. Résine thermoplastique résistant au choc selon la revendication 13, dans laquelle le polymère libre total comprend de 5 à 30% en poids de polymère (A), de 7 à 50% en poids de polymère (B), de 30 à 80% en poids de polymère (C) et de 0 a 20% en poids de polymère (D).

15. Résine thermoplastique résistant au choc selon l'une quelconque des revendications précédentes, contenant le polymère libre total en une proportion de 15 à 100% en poids.

16. Composition de résine thermoplastique comprenant

(I) de 10 à 95% en poids d'une résine thermoplastique résistant au choc selon l'une quelconque des revendications précédentes;

(II) de 5 à 90% en poids d'un poly(éther de phénylène); et

(III) de 0 à 85% en poids d'autre(s) résine(s) de styrène.

17. Composition de résine thermoplastique selon la revendication 16, dans laquelle le poly(éther de phénylène) est un composé obtenu par polymérisation par combinaison oxydante, en présence d'un catalyseur, d'au moins un composé phénolique de formule

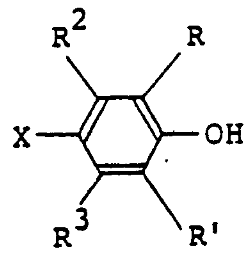

dans laquelle X est un atome d'hydrogène, chlore, brome ou iode; R est un groupe hydrocarboné monovalent, un groupe alcoxy monovalent, un groupe halogénohydrocarboné monovalent comportant au moins 2 atomes de carbone entre l'atome d'halogène et le noyau phénolique, ou un groupe halogénoalcoxy monovalent comportant au moins 2 atomes de carbone entre l'atome d'halogène et le noyau phénolique; $R^1$ est identique à R ou est un atome d'halogène; et chacun des radicaux $R^2$ et $R^3$ est identique à $R^1$ ou est un atome d'hydrogène, étant entendu que R, $R^1$, $R^2$ et $R^3$ sont sont exempts d'atomes de carbone tertiaires.

18. Composition de résine thermoplastique selon la revendication 17, dans laquelle le composé phénolique est un composé de formule:

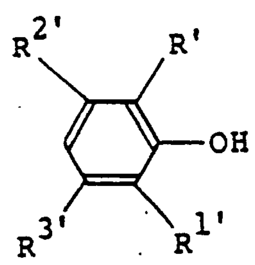

dans laquelle chacun des radicaux R' et $R^{1'}$ est un groupe hydrocarboné monovalent ayant de 1 à 8 atomes de carbone, et chacun des radicaux $R^{2'}$ et $R^{3'}$ est un groupe hydrocarboné monovalent ayant de 1 à 8 atomes de carbone, ou un atome d'hydrogène.

19. Composition de résine thermoplastique selon la revendication 17, dans laquelle le composé phénolique est au moins l'un parmi le 2,6-diméthylphénol, le 2,6-diéthylphénol, le 2-méthyl-6-éthylphénol, le 2-méthyl-6-allylphénol, le 2-méthyl-6-phénylphénol, le 2,6-diphénylphénol, le 2,6-dibutylphénol, le 2-méthyl-6-propylphénol, le 2,3,6-triméthylphénol et le 2,3-diméthyl-6-éthylphénol.

20. Composition de résine thermoplastique selon l'une quelconque des revendications 16 à 19, dans laquelle le poly(éther de phénylène) a une viscosité intrinsèque de 0,2 à 1 dl/g, telle que mesurée dans le chloroforme à 30°C.

21. Composition de résine thermoplastique selon l'une quelconque des revendications 16 à 20, dans laquelle la quantité du poly(éther de phénylène) est de 10 à 60% en poids.

22. Composition de résine thermoplastique selon l'une quelconque des revendications 16 à 21, dans laquelle l'autre résine de type styrène est au moins l'un parmi le polystyrène, le polychlorostyrène, le poly-α-méthylstyrène, un copolymère styrène/acrylonitrile, un copolymère styrène/méthacrylate de méthyle, un copolymère styrène/α-méthylstyrène, un copolymère styrène-α-méthylstyrène/méthacrylate de méthyle, un copolymère styrène/α-méthylstyrène/acrylonitrile/méthyacrylate de méthyle, et des produits de modification de ceux-ci par des caoutchoucs.